# EUROPÄISCHE PATENTSCHRIFT

(11) **EP 2 209 848 B1**
(45) Veröffentlichungstag und Bekanntmachung des Hinweises auf die Patenterteilung: **28.09.2011**
(21) Anmeldenummer: 08849621.1
(22) Anmeldetag: 05.11.2008
(51) Int. Cl.: C08K 5/00, C09D 5/00

(54) **ANTIMIKROBIELL AUSGERÜSTETE, GECOATETE, BIAXIAL ORIENTIERTE POLYESTERFOLIE**
ANTIMICROBIALLY MODIFIED COATED BIAXIALLY ORIENTED POLYESTER FILM
FEUILLE EN POLYESTER À ORIENTATION BIAXIALE, REVÊTUE, À APPRÊTAGE ANTIMICROBIEN

(30) Priorität: 14.11.2007 DE 102007054133
(43) Veröffentlichungstag der Anmeldung: 28.07.2010
(73) Patentinhaber: Mitsubishi Polyester Film GmbH, 65203 Wiesbaden (DE)
(72) Erfinder: KLIESCH, Holger, 65462 Ginsheim-Gustavsburg (DE); KUHMANN, Bodo, 65594 Runkel (DE); HACKL, Thomas, 65510 Hünstetten (DE); JESBERGER, Martin, 55122 Mainz (DE); HILKERT, Gottfried, 55291 Saulheim (DE)
(74) Vertreter: Schweitzer, Klaus
(86) Internationale Anmeldenummer: PCT/EP2008/009307
(87) Internationale Veröffentlichungsnummer: WO 2009/062617

(56) Entgegenhaltungen:
- WO-A-92/15198
- WO-A-2004/063254
- WO-A-2005/042657
- DE-A1- 10 141 599
- US-A1- 2007 227 557

## Beschreibung

Die Erfindung betrifft eine antimikrobiell ausgerüstete, biaxial orientierte Polyesterfolie, bestehend aus mindestens einer Basisschicht (B) und einer auf mindestens einer Oberfläche aufgebrachten Beschichtung, die Ammoniumsilane der allgemeinen Formel I enthält. Die Erfindung betrifft weiterhin ein Verfahren zur Herstellung der Folie und ihre Verwendung.

Die erfindungsgemäßen Folien und daraus hergestellte Artikel eignen sich insbesondere für die Verwendung in medizinischen Geräten und Verpackungen, Wänden von Kühlhäusern (z. B. als Laminat auf Stahl), Oberflächen in Großküchen, Krankenhäusern etc. Insbesondere eignen sich die Folien sehr gut für die Abdeckung und somit zum Schutz von metallischen Oberflächen, auf die die Folien heißgesiegelt oder mit Klebern auflaminiert werden.

Antimikrobiell ausgerüstete, biaxial orientierte Polyesterfolien sind bereits bekannt.

In der WO 2002/062577 werden mit Triclosan antimikrobiell ausgerüstete Polyesterfolien beschrieben. Die Migration von Triclosan aus PET ist jedoch sehr langsam, so dass eine effektive antimikrobielle Wirkung nur bei hohen Beladungen möglich ist. Zudem ist Triclosan eine chlorierte organische Verbindung, welche bei der Regenerierung (z. B. der im Folienproduktionsprozess anfallenden Folienränder) zu potentiell toxischen Chlorverbindungen weiterreagieren kann. Zudem ist Triclosan aus Umweltschutzgründen und wegen der Gefahr von Resistenzbildungen in vielen Anwendungen unerwünscht.

In der WO 2006/000755 werden mit einem Silberionen enthaltenden Zirkoniumphosphat ausgestattete Polyesterfolien beschrieben. Aufgrund der Schichtstruktur dieser Phosphate stehen nur kleine Austrittsspalte für das Silber zur Verfügung, was ebenfalls relativ hohe Beladungen zur effektiven Abwehr von Mikroorganismen nötig macht.

In der EP-A-1 583 793 wird eine Reihe potentiell geeigneter antimikrobieller Substanzen für Beschichtungen vorgeschlagen. In den Ausführungsbeispielen werden silberhaltige Biozide verwendet. Die Beschichtung wird aus einem Lösungsmittel in einem Prozessschritt nach der Folienherstellung aufgebracht, was zusätzliche Kosten und Umweltbelastungen (Lösemittel) mit sich bringt. Die beschriebenen Siegeleigenschaften (Beispiele 5-8) belegen eine verringerte mechanische und thermische Resistenz der Beschichtungen. Dies bedeutet, dass die Folien empfindlich gegen Reinigungen mit üblichen Haushaltsreinigern sind und dass sie aufgrund der beschriebenen Siegeleigenschaften "klebrig" sind. Die in den Beispielen 1-4 der EP-A-1583 793 beschriebenen Folien mit verbesserter Wasserbarriere sind als antimikrobielle Folien, bei denen ein Biozid mit Hilfe von Wasser beispielsweise aus einer unter der Beschichtung liegenden Folienschicht an die Oberfläche migrieren muss, völlig ungeeignet, Zudem ist das dort beschriebene Beschichtungsbasismaterial Saran ein chloriertes Polymer, welches aus Umweltaspekten bedenklich ist und sich nicht für die Regenerierung und Wiederverwendung in Polyesterfolien eignet

Aufgabe der vorliegenden Erfindung war es, eine antimikrobiell wirksame Folie auf Basis biaxial gestreckter Polyester bereitzustellen, die eine in-line aufgebrachte antimikrobielle Beschichtung aufweist und dabei die genannten Nachteile des Standes der Technik vermeidet.

Die Aufgabe wird gelöst durch eine biaxial orientierte Polyesterbasisfolie mit einer Dicke von 5 - 500 µm, auf die mindestens einseitig eine in-line aufgebrachte antimikrobiell wirksame Beschichtung aufgebracht ist, wobei diese antimikrobielle Beschichtung
a) ein Ammoniumsilan der folgenden allgemeinen Formel (I) enthält: 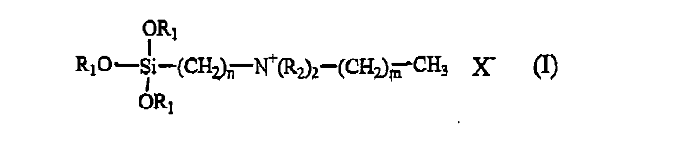 wobei
   - R₁ und R₂: jeweils gleich oder verschieden sind und unabhängig voneinander Wasserstoff- oder C1-C8-Alkylreste sind, die geradkettig oder-im Falle der C3-C8-Alkylreste - verzweigt sein können, bevorzugt sind R₁ und R₂ gleich und bedeuten -CH₃; in wässrigen Dispersionen bedeuten ein, zwei oder alle R₁-Reste Wasserstoff;
   - n: größer als 0 und kleiner als 10 ist, bevorzugt 2 - 5 und besonders bevorzugt 3;
   - m: größer als 0 und kleiner als 30 ist, bevorzugt 6 - 25 und besonders bevorzugt 15 - 20 und ganz besonders bevorzugt 17;
   - X⁻: Chlorid, Sulfat oder Nitrat ist;
   und
b) die Beschichtung eine Dicke von kleiner 1 µm, bevorzugt kleiner 0,3 µm und besonders bevorzugt kleiner 0,15 µm, aufweist.

Die erfindungsgemäße Basisfolie ist ein- oder mehrschichtig.

Besonders bevorzugt ist ein mehrschichtiger Aufbau, in dem zusätzlich zur Basisschicht (B) eine weitere Schicht (A) unter der antimikrobiellen in-line aufgebrachten Beschichtung liegt, die ein antimirobielles Agens enthält, welches bevorzugt auf Silber/Silberionen als Biozid basiert. Diese Schicht (A) weist eine Dicke von < 10 µm, bevorzugt < 5 µm und besonders bevorzugt < 3,5 µm, auf.

In einer weiteren bevorzugten Ausführungsform ist die Folie mindestens dreischichtig und weist dann neben der o. g. Schicht (A) mindestens eine weitere Schicht (C) auf, welche sich auf der der Schicht (A) entgegengesetzten Seite der Basisschicht (B) befindet und welche nicht antimikrobiell beschichtet ist, sondern siegelfähig ist, so dass sich die Folie u. a. gegen Stahlblech und andere Polymere laminieren lässt. Siegelfähige Schichten sind z. B. in EP-A-1 138 480, EP-A-1 097 809, EP-A-1 471 098, EP-A-1 165 317 beschrieben und bestehen in der Regel aus Copolyestern.

### Die Polyesterbasisfolie

Die Basisschicht der Folie besteht bevorzugt zu mindestens 80 Gew.-% aus einem thermoplastischen Polyester. Neben Polyestern können zu maximal 20 Gew.-% Polyamide, Polyetherimide und/oder andere Polymere enthalten sein. Bevorzugt liegt der Anteil solcher Polymere bei unter 5 Gew.% und besonders bevorzugt bei < 1 Gew.-%.

Geeignet sind beispielsweise Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly(1,4-cyclo-hexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 60 Mol% und besonders bevorzugt mindestens 80 Mol-% aus Ethylenglykol- und Terephthalsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, Polyethylenglykol der allgemeinen Formel HO-((CH₂)₂-O)n-(CH₂)₂-OH, wobei n eine Zahl von 3 - 1000 darstellt, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH geeignet, sollten jedoch einen Anteil von 5 Gew.-%, bevorzugt 1 Gew.%, nicht überschreiten.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die (C₃ bis C₁₉)-Alkandisäuren besonders geeignet, wobei der Alkananteil geradkettig oder verzweigt sein kann.

In einer thermoformbaren Ausführungsform besteht das Basischichtpolymer bevorzugt zu weniger als 95 Mol-% aus Ethylenglykol- und Terephthalsäure-Einheiten und besonders bevorzugt zu weniger als 90 Mol-% aus Ethylenglykol- und Terephthalsäure-Einheiten.

Polymere für eine etwaige siegelfähige Deckschicht (C) sind z. B. in den zuvor genannten EP-A-1 138 480, EP-A-1 097 809, EP-A-1 471 098, EP-A-1 165 317 zu finden, ohne auf die dort genannten Abmischungen beschränkt zu sein.

### Die bevorzugt vorhandene antimikrobiell ausgerüstete Deckschicht (A)

Das Polymer für diese Deckschicht entspricht im Wesentlichen dem für die Basisschicht (B). Bevorzugt sind auch hier Polyester, die zu mindestens 60 Mol-%, und besonders bevorzugt mindestens 80 Mol-%, aus Ethylenglykol- und Terephthalsäure-Einheiten bestehen. Es hat sich jedoch als günstig erwiesen, wenn der Polyester zu weniger als 99 Mol-% und bevorzugt zu weniger als 97 Mol-% aus Ethylenglykol- und Terephthalsäureeinheiten aufgebaut ist. Ein erhöhter Anteil an Copolyester erleichtert die Freisetzung der bevorzugt eingesetzten Silberatome/Silberionen aus dem antimikrobiellen Agens in das darüber liegende Medium und verbessert somit die Wirksamkeit. Auf der anderen Seite verringert er aber auch die Widerstandsfähigkeit der Schicht und kann so, insbesondere wenn die Oberfläche mit lösemittelhaltigen Reinigungsmitteln (Ethanol, Aceton etc.) gereinigt wird, zu einem schnellen Verlust der Aktivität und zu optischen Veränderungen der Oberfläche führen. Die folgenden Bereiche sind daher zu bevorzugen:

| | bevorzugt | besonders bevorzugt |
|---|---|---|
| | (Gew.-%) | (Gew.-%) |
| Isophthalsäure (IPA) | 1 - 10 | 4 - 8 |
| DEG (Diethylenglykol) | 1 -10 | 1 - 3 |
| andere Diole | 0,7 - 10 | 1 - 2 |
| andere Dicarbonsäuren als Terephthalsäure | 1 - 10 | 1,5 - 4 |

Die Copolyesterkomponenten können untereinander kombiniert werden. Es sollten jedoch insbesondere aus den oben erwähnten Gründen nicht mehr als zwei Modifizierungskomponenten ausgewählt werden; die anderen optionalen Komponenten sollten dann unterhalb der als bevorzugt angegebenen Bereiche liegen. Weiterhin sollten bei einer Kombination nicht beide Komponenten im Bereich der Obergrenzen des bevorzugten Bereichs liegen. Idealerweise liegen bei mehr als einer Comonomerkomponente beide innerhalb des als besonders bevorzugt ausgewiesenen Bereichs, d. h. eine Folie mit 4 Gew.-% IPA und 2 Gew.-% DEG (beide innerhalb des besonders bevorzugten Bereichs) sollte weniger als 0,7 Gew.-% andere Diole und weniger als 1 Gew.-% andere Dicarbonsäuren enthalten (weniger als die jeweilige Untergrenze des bevorzugten Bereiches).

Das Biozid in dieser Schicht (A) basiert bevorzugt auf elementarem Silber und/oder Silberionen. Als elementares Silber kann es dabei z. B. als Nanopartikel vorliegen (z. B. von Bio-Gate AG, DE), bevorzugt liegt das Silber aber in Form von Silberionen vor. Diese können in Form von silberhaltigen (Ag⁺) Zirkoniumphosphaten (kommerziell erhältlich z. B. Alphasan von Milliken, Spartanburg, USA) und bevorzugt in Form von silberhaltigen (Ag⁺) Gläsern (wie die Irgaguard B7000 Reihe von Ciba SC, CH) und besonders bevorzugt in Form von siberhaltigen (Ag⁺) Zeolithen eingesetzt werden. Letztere sind z. B. unter den Handelsnamen Bactekiller (Kanebo, JP) oder Zeomic (Sinanen, JP) erhältlich.

Das elementare Silber und/oder das mit Silberionen beladene Partikel (Glas, Zirkonphosphat, Zeolith) wird der Schicht (A) in einer Konzentration von 0,5 bis 15 Gew.-% zugegeben. Bevorzugt sind dabei Beladungen von 1 - 6 Gew.-% und besonders bevorzugt von 1,5 - 3,5 Gew.-%. Je höher die Beladung mit Partikeln, desto größer ist die Beeinträchtigung der Oberflächenqualität und der Optik der Folie, d. h. die Rauheit und die Trübung nehmen zu. Die Trübung beeinträchtigt häufig das Aussehen des fertigen Produktes (z. B. Stahlblech) und ist in der Regel unerwünscht. Ausnahmen stellen jedoch weiße oder Folien mit mattem Design dar. Eine hohe Rauheit erleichtert das Anheften von Keimen auf der Oberfläche und ist daher ebenfalls unerwünscht. Die Rauheit der Oberfläche sollte im Allgemeinen unterhalb eines Rₐ von 1000 nm , bevorzugt unterhalb von 600 nm und besonders bevorzugt unterhalb von 300 nm, liegen.

Die mittlere Teilchengröße (d₅₀) der Biozid-Partikel liegt dabei in der Regel zwischen 0,5 und 15 µm bevorzugt zwischen 1,8 und 6 µm und besonders bevorzugt zwischen 2,1 und 3,5 µm. Es hat sich dabei gezeigt, dass kleinere Partikel (< 1,8 µm) Silber zwar schneller freisetzen und damit bei gleicher Beladung und Silberkonzentration in der Folienschicht die Anfangsaktivitäten mit kleineren Partikeln besser sein können als mit großen, aber nach einer Reihe von Reinigungszyklen (wie unten in Messmethoden beschrieben) fällt die hohe Anfangsaktivität dann rascher ab als bei der Verwendung von größeren Partikeln (> 1,8 µm), die die Wirksamkeit über einen längeren Zeitraum gewährleisten. Bei großen Partikeln (> 6 µm) und insbesondere bei sehr großen Partikeln (> 15 µm) wird die Verteilung an der Oberfläche zu ungleichmäßig, um eine ausreichende Wirksamkeit gegen Bakterien zu gewährleisten. Dies lässt sich zwar durch eine Steigerung der Beladung ausgleichen, hat dann aber Nachteile in der Wirtschaftlichkeit und in der Prozesssicherheit der Folie, da es bei zu hohen Beladungen insbesondere mit großen Partikeln vermehrt zu Abrissen in der Folienproduktion kommt. Allgemein nimmt mit der Größe des Partikels auch der Abrieb in der Herstellung und in der Weiterverarbeitung sowie in der Endanwendung zu. Dies führt neben dem ohnehin unerwünschten Staub auch zu einem Verlust an Wirksamkeit. Daher hat sich der oben angegebene Bereich von 2,1 bis 3,5 µm als besonders günstig erwiesen. Im Allgemeinen hat es sich als ungünstig für den Abrieb erwiesen, wenn der d₅₀-Wert der Größenverteilung des Partikels mehr als das Doppelte der Schichtdicke der das Partikel enthaltenden Schicht ausmacht.

Werden Zeolithe verwendet, so liegt die Menge an Silber im Zeolith bevorzugt bei 0,5 bis 20 Gew.-% und besonders bevorzugt bei 3 - 6 Gew.-%. Es hat sich zudem als günstig erwiesen, wenn der Zeolith 1 - 20 Gew.-% Zink und/oder Kupfer enthält. Bevorzugt enthält der Zeolith mindestens 6 Gew.-% Zink oder und Kupfer. Die Herstellung der Zeolithe erfolgt nach bekannten Verfahren wie sie z. B. in JP-A-11 193 358, EP-A-0 297 538 oder US 2004/147654 beschrieben sind. Erfindungsgemäß verwendbare Zeolithe sind z. B. unter den Handelsnamen Bactekiller (Kanebo, JP) oder Zeomic (Sinanen, JP) erhältlich.

Unabhängig von der Natur des Silberzuschlagstoffs liegt der Gehalt an Silber in der ausgerüsteten Schicht bei 0,01 - 2,5 Gew.% und bevorzugt bei 0,1 - 0,4 Gew.-%.

### Die Folie im Allgemeinen

Die Herstellung der Polyester für alle Schichten kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Natrium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Die Folie kann weitere anorganische und/oder organische Partikel enthalten. Diese sind beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z. B. Polystyrol- oder Acrylat-Partikel. In der/den antimikrobiell ausgestatten Schicht/en sollte der Anteil solcher Partikel 2000 ppm nicht überschreiten und liegt bevorzugt unter 1000 ppm. Eine Ausnahme von dieser Regel stellen nur weiße Folienvarianten dar, wobei die eingesetzten Weißpigmente (bevorzugt TiO₂ oder BaSO₄) hierbei mindestens in der antimikrobiell ausgestatteten Schicht eine mittlere Teilchengröße unter 1,8 µm aufweisen sollten, um die Oberflächenrauheit nicht zu stark zu erhöhen.

In einer bevorzugten Ausführungsform enthält die Folie zudem mindestens einen UV-Stabilisator. Im Prinzip können sämtliche organischen und anorganischen UV Stabilisatoren, die für die Einarbeitung in Polyestern geeignet sind, ausgewählt werden. Solche geeigneten UV-Stabilisatoren sind bekannt und z. B. in WO 98/06575**,** EP-A-0144 878**,** EP-A-0 031202**,** EP-A-0 031203 oder EP-A-0 076 582 näher beschrieben. Geeignet sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und/oder Triazine, wobei die Triazine bevorzugt sind. Bevorzugt enthält die dem Licht zugewandte Schicht der Folie mindestens 50 % mehr UV-Stabilisator (in Gew.-%) als die übrigen Schichten, wobei die Gesamtkonzentration an Lichtschutzmittel in der Folie vorzugsweise im Bereich von 0,2 Gew.-% bis 5,0 Gew.-% liegt.

Die Zugabe von UV-S chutzmitteln verhindert ein mechanisches Versagen der Folie über die Zeit, insbesondere in Außenanwendungen. Daneben reduziert das UV-Schutzmittel auch die Zunahme der Gelbzahl im Laufe der Alterung der Folie.

Wenn eine silberhaltige Schicht vorhanden ist, führt diese aber auch ohne Alterung durch Lichteinfluss bereits bei der Produktion zu einem sichtbaren Gelb- bis Braunstich. Neben den Photostabilisatoren enthält die Folie daher bevorzugt mindestens einen blauen Farbstoff, um den durch die Silberverbindung ausgelösten Gelbstich zu kompensieren. Bevorzugt werden hierbei Farbstoffe verwendet, die im Polyester löslich sind, und keine Pigmente, da im Falle der Verwendung letzterer die Zugabemenge für den gleichen Effekt erhöht werden muss und eine zusätzliche Rauheit über diese Partikel erzeugt wird. Hier können beispielsweise die folgenden Blaufarbstoffe verwendet werden: Clariant Blue RBL, Blue RLS (Ciba, CH); Lanxess (vormals Bayer) Blue 3R Gran, Blue RR Gran (Lanxess, DE); Ciba Filester types Blue GN (Ciba, CH). Neben den blauen Farbstoffen hat es sich als vorteilhaft erwiesen, auch einen Grünfarbstoff wie IRGALITE GREEN GFNP (Ciba SC, Basel, CH) hinzuzugeben, um eine neutrale Farbe zu erreichen. Bevorzugt liegt der Gehalt an Blaufarbstoff unter 200 ppm in der Folie und der Anteil an Grünfarbstoff liegt bevorzugt unter 100 ppm. In der bevorzugten Ausführungsform liegt die Gelbzahl der Folie unter 7 und besonders bevorzugt unter 3. Eine Farbstabilisierung ist insbesondere dann von Bedeutung, wenn das bei der Herstellung anfallende Regenerat erneut eingesetzt werden soll. Zweckmäßigerweise wird ein Teil des Regenerates in die antimikrobiell ausgestattetet Deckschicht zurückgeführt. Der Anteil an Regenerat sollte in keiner Schicht 50 Gew.-% übersteigen, da insbesondere bei Verwendung von Zeolithen aufgrund deren hygroskopischer Natur bei höheren Anteilen Laufsicherheitsprobleme auftreten.

Neben diesen Stabilisatoren und Farbstoffen, kann die Folie weiterhin optische Aufheller wie Ciba Tinopal OB-One (Ciba, CH) oder andere enthalten. Gegenüber der Zugabe von Blaufarbstoffist diese Zugabe jedoch weniger bevorzugt, da optische Aufheller ihren Effekt nur bei Vorhandensein von ausreichend UV-Licht entfalten können.

Die Gesamtdicke der erfindungsgemäßen Polyesterfolie kann innerhalb weiter Grenzen variieren. Sie beträgt bevorzugt 5 bis 500 µm, besonders bevorzugt 10 bis 51 µm und ganz besonders bevorzugt 12 bis 23 µm.

Die antimikrobielle Beschichtung enthält Ammoniumsilane der folgenden allgemeinen Formel: 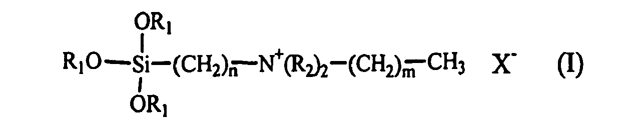 wobei
- R₁ und R₂: jeweils gleich oder verschieden sind und unabhängig voneinander Wasserstoff- oder C1-C8-Alkylreste sind, die geradkettig oder- im Falle der C3-C8-Alkylreste - verzweigt sein können, bevorzugt sind R₁ und R₂ gleich und bedeuten -CH₃; in wässrigen Dispersionen bedeuten ein, zwei oder alle R₁-Reste Wasserstoff;
- n: größer als 0 und kleiner als 10 ist, bevorzugt 2 - 5 und besonders bevorzugt 3;
- m: größer als 0 und kleiner als 30 ist, bevorzugt 6 - 25 und besonders bevorzugt 15 - 20 und ganz besonders bevorzugt 17;
- X⁻: Chlorid, Sulfat oder Nitrat ist.

Das Ammoniumsilan trägt eine positive Ladung. Das Gegenion ist unkritisch; üblicherweise handelt es sich um Chlorid, Sulfat oder Nitrat, wobei Chlorid bevorzugt ist.

Solche Verbindungen sind z. B. von Aegis (USA) oder Sanitized (CH) erhältlich.

Die Ammoniumsilane werden aus wässriger Lösung oder Dispersion beschichtet. Außer Wasser als Lösungsmittel enthält die Beschichtungslösung/Dispersion weniger als 20 Gew.-%, bevorzugt weniger als 10 Gew-.% und besonders bevorzugt weniger als 6 Gew.-%, andere Lösemittel wie z. B Methanol, Ethanol, Aceton etc.. Besonders bevorzugt enthält die Beschichtungslösung/Dispersion weniger als 1 Gew.-% organisches Lösungsmittel.

Der Anteil an Ammoniumsilan in der Beschichtungslösung/Dispersion beträgt zweckmäßigerweise 0,5 - 75 Gew.-%, bevorzugt 1 - 15 Gew.-% und besonders bevorzugt 1,5 - 5 Gew.-%.

Es hat sich als günstig erwiesen, wenn die erfindungsgemäßen Ammoniumsilane mit anderen Beschichtungskomponenten kombiniert werden, die die Haftung zum Polyester verbessern. So kann insbesondere eine verbesserte Reinigungsbeständigkeit (s. Abschnitt Messmethoden vor den Beispielen) erreicht werden. In einer bevorzugten Ausführungsform werden die erfindungsgemäßen Ammoniumsilane mit anderen Silanen und/oder Aminosilanen wie Z6020 oder Z6040 von Dow Corning (USA), A-1100 oder A-187 von Union Carbide (USA) oder allgemein Aminosilanen, wie sie in US-A-5,064,722 beschrieben sind, kombiniert. Sofern vorhanden haben diese anderen Silane/Aminosilane in dieser Ausführungsform einen Anteil von 0,5 - 35 Gew.-% an der Beschichtungsdispersion, bevorzugt 1 - 10 Gew.-% und besonders bevorzugt 2 - 7 Gew.-%.

Ebenfalls bevorzugt ist die Kombination der erfindungsgemäßen Ammoniumsilane mit Acrylaten. Geeignete Acrylate sind unter anderem in der US-A-4,571,363 beschrieben. Das Ammoniumsilan wird dabei bevorzugt aus wässriger Lösung in den oben genannten Anteilen in die fertige Acrylatdispersion eingerührt. Sofern vorhanden, beträgt der Anteil an Acrylat an der resultierenden Beschichtungsdispersion 0,5 - 25 Gew.-% und bevorzugt 1 - 6 Gew.-%. Überraschenderweise hat sich bei dieser Ausführungsform gezeigt, dass die antimikrobielle Aktivität der Beschichtung bei gleicher Menge an erfindungsgemäßem Ammoniumsilan durch die Kombination mit dem Acrylat nicht nur nicht geringer wurde, sondern sogar noch gesteigert werden konnte.

Auch die Kombination mit Silikonbeschichtungen hat sich als günstig erwiesen, wobei sich diese Kombination für Ausführungsformen mit silberhaltiger Schicht unter der Ammoniumsilanbeschichtung als weniger geeignet erwiesen hat. Geeignete Silikonbeschichtungsdispersionen sind u. a. in US-A-5,728,339 und US-A-5,672,428 beschrieben.

### Herstellungsverfahren

Die Beschichtung kann sowohl einseitig als auch beidseitig aufgebracht werden und erfolgt "in-line" während der Polyesterfolienherstellung. Üblicherweise wird die Beschichtungsdispersion nach der Längsstreckung und vor der Querstreckung auf die Folie aufgebracht. Bei einer Simultanverstreckung (längs und quer in einem Streckrahmen) wird die Beschichtung vor der Streckung aufgebracht.

Die Beschichtung wird nach bekannten Verfahren aufgebracht, wobei "reverse gravure" und "Meyer bar" bevorzugt sind.

Die Beschichtungsgewichte liegen im Endzustand der Folie (Trockenantrag) bei 0,005 - 1,3 g/m², wobei Beschichtungsgewichte von 0,01 bis 0,3 g/m² bevorzugt, und 0,02 bis 0,1 g/m² besonders bevorzugt sind. Größere Trockengewichte führen nicht zu einer Verbesserung der antimikrobiellen Wirksamkeit Diese ist im Bereich der bevorzugten Beschichtungsgewichte optimal. Die Beschichtungshomogenität und Abriebfestigkeit nimmt ebenfalls mit zunehmendem Beschichtungsgewicht ab und ist im Bereich der besonders bevorzugten Beschichtungsgewichte optimal.

Die Trockenantragsgewichte ergeben sich aus dem Nassantrag gemäß folgender Gleichung: Trockenantragsgewicht in g/m² = (Nassantrag in g/m² minus (Gewicht Wasser und/oder Gewicht Lösemittel, jeweils in g/m²)) dividiert durch das Flächenstreckverhältnis nach der Beschichtung

Die Erfindung betrifft auch ein Verfahren zur Herstellung der erfindungsgemäßen biaxial orientierten Polyesterfolie nach dem an sich aus der Literatur bekannten Extrusions- bzw. Coextrusionsverfahren.

Das in einer bevorzugten Ausführungsform im Rohstoff von mindestens einer Außenschicht vorhandene silberhaltige Biozid wird bevorzugt über ein Masterbatch in die entsprechende Schicht eingebracht. Hierzu werden silberhaltige Komponente und Polyester in einem Mehrschneckenextruder gemischt und durch eine Lochdüse extrudiert und granuliert.

Im Rahmen des Folienherstellverfahrens wird so vorgegangen, dass die den einzelnen Schichten entsprechenden Polymere, gegebenenfalls inklusive der Additive, in einem Extruder aufgeschmolzen werden und durch eine Flachdüse coextrudiert werden, die so erhaltene Vorfolie zur Verfestigung auf einer oder mehreren Walzen abgezogen wird, die Vorfolie anschließend biaxial gestreckt, die biaxial gestreckte Folie thermofixiert und dann aufgerollt wird.

Die biaxiale Streckung (Orientierung) wird im Allgemeinen aufeinanderfolgend durchgeführt, kann aber auch simultan erfolgen, wobei die aufeinanderfolgende biaxiale Streckung, bei der zuerst längs (in Maschinenrichtung) und dann quer (senkrecht zur Maschinenrichtung) gestreckt wird, bevorzugt ist. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130°C und die Querstreckung bei einer Temperatur im Bereich von 90 bis 150 °C durchgeführt. Das Längsstreckverhältnis liegt allgemein im Bereich von 2,5:1 bis 6:1, zum Einstellen der gewünschten mechanischen Eigenschaften (s. u.) bevorzugt im Bereich von 3,0:1 bis 5,5:1. Das Querstreckverhältnis liegt allgemein im Bereich von 3,0:1 bis 5,0:1, zum Einstellen der gewünschten mechanischen Eigenschaften (s. u.) bevorzugt im Bereich von 3,5:1 bis 4,5:1.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt. Eine otimale Haftung der Ammoniumsilane wird erreicht, wenn die Folie in der Thermofixierung auf mindestens 180 °C und besonders bevorzugt auf mindestens 220 °C erwärmt wird. Temperaturen oberhalb von 237 °C sind weniger bevorzugt, da sie zu einem Teilabbau der Ammoniumsilanbeschichtung führen.

Folien, die nach dem oben genannten Verfahren unter Verwendung der beschriebenen Ausgangsmaterialien hergestellt wurden, weisen in beiden Folienrichtungen einen E-Modul von größer 2000 N/mm², bevorzugt größer 3000 N/mm² und besonders bevorzugt größer 4300 N/mm², auf. Für den erfindungsgemäßen Einsatz sind solche mechanischen Eigenschaften vorteilhaft, da sich die Folie sonst bei mechanischer Belastung zu leicht verdehnt, was zu Beschädigungen der Beschichtung führen kann, welches eine abnehmende antimikrobielle Wirksamkeit mit sich bringen kann.

### Vorteile der Erfindung

Die erfindungsgemäße Folie weist eine sehr gute Wirksamkeit gegen Bakterien, Viren, Algen und Pilze auf. Die Wirkung ist zudem auch nach einer Reihe von Reinigungszyklen noch erhalten. Die Folie lässt sich zudem gut herstellen. In der siegelfähigen Variante siegelt sie gegen sich selbst und gegen Substrate aus verschiedenen Polymeren wie Polyamid, Polycarbonat und Metalle (z. B. Aluminium, Stahl, lackierter Stahl, verchromter oder verzinnter Stahl). Die Folie ist damit in vielen Bereichen einsetzbar. Besonders geeignet ist die Folie aber auch in nicht siegelfähigen Varianten für eine Aufbringung auf Metalle und andere Substrate nach den in WO 2006/102858 A2 und WO 2006/102957 A2 beschriebenen Verfahren.

Insbesondere die Kombination aus Ammoniumsilanbeschichtung und silberhaltiger Basisschicht weist eine gute Aktivität gegen Keime auf, wohingegen eine Ausrüstung in entweder nur der Beschichtung oder nur der Folie keine ausreichende Aktivität gezeigt hat (z. B. Aspergillus niger, Pseudomonas spp.etc.).

Die Folien gemäß der Erfindung und die daraus hergestellten Artikel eignen sich aufgrund ihrer hervorragenden Eigenschaftskombinationen für eine Vielzahl verschiedener Anwendungen, beispielsweise für Innenraumverkleidungen, Möbelverkleidung, Klimaanlagen, Filtergehäuse, medizinische Geräte, Wände von Kühlhäusern, medizinische Verpackungen, Lebensmittelverpackungen, im Sanitärbereich, für Hygieneartikel, Wundpflaster, Anwendungen im Bekleidungssektor sowie Folienanwendungen in Gewächshäusern etc.

Zur Charakterisierung der Rohstoffe und der Folien wurden im Rahmen der vorliegenden Erfindung die folgenden Messmethoden benutzt:

### Messung des mittleren Partikeldurchmessers d₅₀ an Partikeln vor der Einbringung in den Rohstoff

Die Bestimmung des mittleren Partikeldurchmessers d₅₀ wird mittels Laser auf einem Master Sizer (Malvern Instruments, UK) nach der Standardmethode durchgeführt. Andere Messgeräte sind z. B. Horiba LA 500 (Horiba Ltd., JP) oder Helos (Sympatec GmbH, DE), welche das gleiche Messprinzip verwenden. Die Proben werden dazu in eine Küvette mit Wasser gegeben und diese dann in das Messgerät gestellt. Der Messvorgang ist automatisch und beinhaltet auch die mathematische Bestimmung des d₅₀-Wertes. Der d₅₀-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten d₅₀-Wert.

### Messung des mittleren Partikeldurchmessers d₅₀ an Zeolith-Partikeln in der Folie

Die Folie wird zur Betrachtung der antimikrobiell ausgerüsteten Seite in ein Rasterelektronenmikroskop eingebracht. An 10 unterschiedlichen Stellen auf der Oberfläche werden auf je 100 · 100 µm² großen Stücken alle Zeolithe > 0,4 µm vermessen und die mittlere Teilchengröße der Stücke bestimmt, und das Mittel der 10 Teilstücke ergibt den d₅₀-Wert der Partikel in der Folie. Die Zeolithe können dabei aufgrund ihrer charakteristischen Form oder im Zweifel per EDX-Elementanalyse identifiziert werden.

Der d₅₀-Wert wird bevorzugt an den eingesetzten (freien, kommerziell erhältlichen) Partikeln gemessen. Wenn dies nicht möglich ist, z. B. in der Folie selbst oder bei Lieferung der Partikel bereits fertig als Masterbatch, kann auch die Methode über die Auszählung in der Folie gewählt werden. Es wird dabei angenommen, dass beide Messverfahren im Rahmen der Messungenauigkeiten zu gleichen Ergebnissen führen, was bei schonenden Herstellverfahren auch der Fall ist. Ist dem Folienhersteller bekannt, dass z. B. aufgrund hoher Scherkräfte in den Extrudern die mittleren Partikeldurchmesser in der Folie von denen der freien, kommerziell erhältlichen Partikel abweichen, so kann über eine Messreihe in der Folie und eine Normierung mit Partikeln mit bekanntem d₅₀-Wert eine Korrelation zwischen dem d₅₀-Wert der freien Partikel und dem d₅₀-Wert der Partikel in der Folie hergestellt werden, so dass aus den Daten, gemessen in der Folie, auf die d₅₀-Werte in den freien Partikel extrapoliert werden kann und umgekehrt.

### Messung der mechanischen Eigenschaften der Folie

Die Bestimmung der mechanischen Eigenschaften erfolgt nach DIN EN ISO 527-1 bis 3.

### Trübung

Die Trübung wird in Anlehnung an ASTM D 1003 - 52 bestimmt.

### Rauigkeit

Die Rauigkeit Rₐ der Folie wird nach DIN 4768 bestimmt.

### Gelbwert (Gelbzahl)

Der Gelbwert G (YID) ist die Abweichung von der Farblosigkeit in Richtung "Gelb" und wird gemäß DIN 6167 gemessen.

### Messung der antimikrobiellen Aktivität

Die antimikrobielle Aktivität wird in Anlehnung an ASTM E2149-01 bestimmt (1 g Muster, 50 ml 0,3mM KH₂PO₄, 1X10⁵ E.coli / ml, 0;01 % Q2-5211 Tensid). Bestimmt wird die Reduzierung von Escherichia coli nach 24 Stunden.

### Messung der antimikrobiellen Aktivität nach Reinigung

Die Folie wird 5-mal mit einem Baumwolltuch von Hand abgewischt und anschließend über Nacht an der Luft getrocknet. Das Baumwolltuch ist dabei mit einer Mischung aus 95 % Wasser und 5 % Ethanol getränkt. Diese Prozedur wird 30 Tage in Folge wiederholt. Nach dieser Prozedur wird nach einem Tag Wartezeit bei 25 °C und 50 % rel. Luftfeuchte wie oben angegeben die antimikrobielle Aktivität bestimmt.

### Abrisse bei der Folienherstellung

Die Anzahl der Folienabrisse pro Zeiteinheit in der Produktion wird mit der bei Herstellung von Folie nach dem Stand der Technik verglichen und die prozentuale Abweichung festgestellt.

### Beispiele

Die Rohstoffe MB1- 5 enthalten 0,9 bis 1,3 Gew.-% DEG; RT49 enthält 0,6 Gew.-% DEG; alle genannten Rohstoffe (bis auf S1) enthalten < 0,2 Gew.-% IPA und andere Diole und Dicarbonsäuren <0,1 Gew.%.

### Beispiel 1

Es wurde eine einschichtige Folie der Dicke 20 µm hergestellt. Die Rohstoffe wurden in einem Zweischneckenextruder aufgeschmolzen und durch eine Flachdüse extrudiert.

Es wurden folgende Rohstoffe dosiert:

| | |
|---|---|
| 10 Gew.-% | MB1 = 10 Gew.-% UV-Stabilisator Cyasorb 1164 (Cytec Inc., USA) und 90 Gew.-% Polyethylenterephthalat (hergestellt durch Einarbeiten des UV-Stabilisators in den Polyester in einem Zweischneckenextruder) |
| 3 Gew.-% | MB3 = 10000 ppm SiO₂-Partike (Sylysia 320; Hersteller Fuji Silysia, JP, mit Partikelgröße d₅₀ = 2,5 µm) und 99 Gew.-% Polyethylenterephthalat |
| 87 Gew.-% | Polyethylenterephthalat RT49 der Firma Invista, DE |

Die Vorfolie wurde mit einem Streckfaktor von 3,5 in Längsrichtung bei einer Temperatur von 102 °C gestreckt und anschließend nach dem Reverse-Gravur-Verfahren mit der Beschichtungsdispersion 1 beschichtet.

Die Beschichtungsdispersion 1 enthält 2 Gew.-% Dimethyloctadecyl[3-(trimethoxy-silyl)propyl]ammoniumchlorid (CAS 27668-52-6, Devan Chemicals, BE), 0,3 Gew.-% Methanol, Rest Wasser.

Es wurden 2 g dieser Dispersion pro m² angetragen.

Die Folie wurde anschließend bei 105°C mit einem Streckfaktor von 4,1 in Querrichtung verstreckt. Die Folie wurde anschließend thermofixiert, die Maximaltemperatur betrug 232 °C.

### E-Module

Längrichtung 4650 N/mm²
Querrichtung 5050 N/mm²
Gelbzahl: 2,8
Rauigkeit Rₐ: 55nm

### Antimikrobielle Wirkung

Reduktion Escherichia coli nach 24 h um 99,5 %
- nach Reinigung: Reduktion Escherichia coli nach 24 h um 82 %

### Beispiel 2

Es wurde eine Folie wie in Beispiel 1 beschrieben hergestellt, jedoch wurde die Beschichtungsdispersion 2 verwendet:

Beschichtungsdispersion 2 enthält 2 Gew.-% Dimethyloctadecyl[3-(trimethoxy-silyl)propyl]ammoniumchlorid (CAS 27668-52-6, Devan Chemicals, BE), 0,3 Gew.-% Methanol, 2 Gew.-% Z6020 von Dow Corning (Aminosilan), Rest Wasser.

Es wurden 2 g dieser Dispersion pro m² angetragen.

### E-Module

Längrichtung 4600 N/mm²
Querrichtung 5100 N/mm²
Gelbzahl: 3,2
Rauigkeit Rₐ: 58 nm

### Antimikrobielle Wirkung

Reduktion Escherichia coli nach 24 h um 99,9 %
- nach Reinigung: Reduktion Escherichia coli nach 24 h um 90,8 %

### Beispiel 3

Es wurde eine Folie wie in Beispiel 1 beschrieben hergestellt, jedoch wurde die Beschichtungsdispersion 3 verwendet:
Beschichtungsdispersion 3 entspricht der von Beisspiel 1 aus US-A-4,571,363, wobei jedoch 3 Gew.-% Dimethyloctadecyl[3-(trimethoxysilyl)propyl]ammoniumchlorid (CAS 27668-52-6,
Devan Chemicals, BE) und 0,3 Gew.-% Methanol hinzugegeben wurden; Rest Wasser.

Es wurden 2 g dieser Dispersion pro m² angetragen.

### E-Modul

Längrichtung 4550 N/mm²
Querrichtung 5060 N/mm²
Gelbzahl: 2,9
Antimikrobielle Wirkung
Reduktion Escherichia coli nach 24 h um 99,9 %
- nach Reinigung: Reduktion Escherichia coli nach 24 h um 97,1 %

### Beispiel 4

Es wurde eine dreischichtige Folie der Dicke 20 µm hergestellt. Die antimikrobielle Deckschicht A hatte eine Dicke von 2,2 µm. Die siegelfähige Deckschicht C war 2,0 µm dick. Die Basisschicht (B) war 15,8 µm dick. Die Rohstoffe wurden für jede Schicht separat in einem Zweischneckenextruder aufgeschmolzen und durch eine Dreischicht-Flachdüse extrudiert.

In der Basisschicht (B) wurden die folgenden Rohstoffe dosiert:
10 Gew.-% MB1
90 Gew.-% Polyethylenterephthalat RT49

In der antimikrobiell ausgerüsteten Deckschicht (A) kamen die folgenden Rohstoffe zum Einsatz:
20 Gew.-% MB 1
20 Gew.-% MB 2 = 10 Gew.-% silberhaltiger Zeolith AK80H (Agion, USA) (d₅₀ = 2 µm; Zeolith mit 5 Gew.-% Silber und 13 Gew.-% Zink) und 90 Gew.-% Polyethylenterephthalat (hergestellt durch Einarbeiten des Zeoliths in den Polyester in einem Zweischneckenextruder)
60 Gew.-% Polyethylenterephthalat RT49

Die Rohstoffe für die siegelfähige Deckschicht (C) waren folgendermaßen zusammengesetzt:
97 Gew.-% S1, bestehend aus einem amorphen Copolyester mit 80 Mol.-% Ethylenterephthalat und 20 Mol-% Ethylenisophthalat (hergestellt über das Umesterungsverfahren mit Mₙ als Umesterungskatalysator, Mₙ-Konzentration: 100 ppm)
3 Gew.-% MB3 = 10000 ppm SiO₂-Partikel (Sylysia 320, Hersteller Fuji Silysia JP; Partikelgröße d₅₀ = 2,5 µm) und 99 Gew.% Polyethylenterephthalat.

Dann wurde durch Coextrusion und anschließende stufenweise Orientierung in Längs- und Querrichtung eine transparente, dreischichtige Folie mit ABC-Aufbau hergestellt. Die längsgestreckte Folie wurde auf der Deckschichtseite (A) (= antimikrobille Deckschicht) nach dem Reverse-Gravur-Verfahren mit der Beschichtungsdispersion 1 beschichtet.

Es wurden 2 g dieser Dispersion pro m² angetragen.

Die Herstellungsbedingungen in den einzelnen Verfahrensschritten waren:

| | | | | |
|---|---|---|---|---|
| Extrusion | Temperaturen | A-Schicht: | 281 | °C |
| | | B-Schicht: | 283 | °C |
| | | C-Schicht: | 285 | °C |
| | Temperatur der Abzugswalze | | 20 | °C |
| Längsstreckung | Aufheiztemperatur | | 70-120 | °C |
| | Strecktemperatur | | 115 | °C |
| | Längsstreckverhältnis | | 3,7 | |
| Querstreckung | Aufheiztemperatur | | 100 | °C |
| | Strecktemperatur | | 125 | °C |
| | Querstreckverhältnis | | 4 | |
| Fixierung | Temperatur | | 232 | °C |
| | Dauer | | 3 | s |

### E-Module

Längrichtung 4500 N/mm²
Querrichtung 5100 N/mm²
Gelbzahl: 2,4
Rauigkeit Rₐ: 200 nm

### Antimikrobielle Wirkung

Reduktion Escherichia coli nach 24 h um 99,9 %
- nach Reinigung: Reduktion Escherichia coli nach 24 h um 99,7 %

### Vergleichsbeispiel

Kommerziell erhältliche Standard-Polyesterfolie RNK 23 (Mitsubishi Polyester Film GmbH, DE; 23 µm dicke Polyestermonofolie ohne Beschichtung)

### Antimikrobielle Wirkung

Reduktion Escherichia coli nach 24 h um 0 %
- nach Reinigung: Reduktion Escherichia coli nach 24 h um 0 %

## Patentansprüche

1. Biaxial gestreckte Polyesterfolie, umfassend mindestens eine Basisschicht (B) und mindestens eine antimikrobiell wirksame Beschichtung, wobei diese antimikrobielle Beschichtung
a) ein Ammoniumsilan der folgenden allgemeinen Formel (I) enthält: 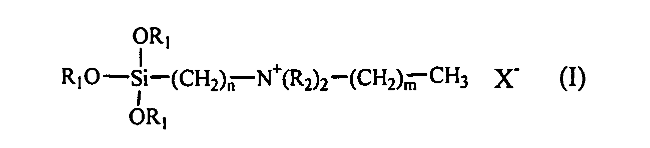 wobei
R₁ und R₂ jeweils gleich oder verschieden sind und unabhängig voneinander Wasserstoff- oder C1-C8-Alkylreste sind, die geradkettig oder - im Falle der C3-C8-Alkylreste - verzweigt sein können, bevorzugt sind R₁ und R₂ gleich und bedeuten -CH₃; in wässrigen Dispersionen bedeuten ein, zwei oder alle R₁-Reste Wasserstoff;
n größer als 0 und kleiner als 10 ist, bevorzugt 2 - 5 und besonders bevorzugt 3;
m größer als 0 und kleiner als 30 ist, bevorzugt 6 - 25 und besonders bevorzugt 15 - 20 und ganz besonders bevorzugt 17;
X⁻ Chlorid, Sulfat oder Nitrat ist;
und
b) die Beschichtung eine Dicke von kleiner 1 µm aufweist.

2. Polyesterfolie nach Anspruch 1, **dadurch gekennzeichnet**, das sie neben einer Basisschicht (B) eine weitere Schicht (A) unter der antimikrobiellen Beschichtung aufweist, die ein antimirobielles Agens enthält.

3. Polyesterfolie nach Anspruch 2, **dadurch gekennzeichnet, dass** das antimikrobielle Agens auf elementarem Silber und/oder Silberionen als Biozid basiert.

4. Polyesterfolie nach Anspruch 2 oder 3, **dadurch gekennzeichnet, dass** sie neben der Basisschicht (B) und der Schicht (A) eine weitere Schicht (C) umfasst, welche sich auf der der Schicht (A) entgegengesetzten Seite der Basisschicht (B) befindet und welche nicht antimikrobiell beschichtet ist.

5. Polyesterfolie nach Anspruch 4, **dadurch gekennzeichnet, dass** die Schicht (C) siegelfähig ist.

6. Polyesterfolie nach einem der Ansprüche 2 bis 5, **dadurch gekennzeichnet, dass** das antimikrobielle Agens ein mit Silber beladener Zeolith ist.

7. Polyesterfolie nach einem der Ansprüche 2 bis 6, **dadurch gekennzeichnet, dass** der Zeolith in der Schicht (A) in einer Konzentration von 0,5 - 15 Gew.-%, bezogen auf die Masse der zeolithhaltigen Schicht, vorhanden ist.

8. Polyesterfolie nach Anspruch 6 oder 7, **dadurch gekennzeichnet, dass** die mittlere Teilchengröße (d₅₀) des Zeoliths 0,5 bis 15 µm beträgt.

9. Polyesterfolie nach Anspruch 6, 7 oder 8, **dadurch gekennzeichnet, dass** die Menge an Silber im Zeolith 0,5 bis 20 Gew.-%, bezogen auf die Masse des Zeoliths, beträgt.

10. Polyesterfolie nach einem der Ansprüche 6 bis 9, **dadurch gekennzeichnet, dass** der Zeolith 1 - 20 Gew.-% Zink und/oder Kupfer, bezogen auf die Masse des Zeoliths, enthält.

11. Polyesterfolie nach einem der Ansprüche 1 bis 10, **dadurch gekennzeichnet, dass** die Folie mindestens einen UV-Stabilisator enthält.

12. Polyesterfolie nach Anspruch 11, **dadurch gekennzeichnet, dass** der UV-Stabilisator ein Triazin ist.

13. Polyesterfolie nach einem der Ansprüche 1 bis 12, **dadurch gekennzeichnet, dass** die Folie mindestens einen Farbstoff enthält, der im Polyester löslich ist.

14. Verfahren zur Herstellung einer Folie nach Anspruch 1, wobei die den einzelnen Schichten entsprechenden Polymere in einem Extruder aufgeschmolzen werden und durch eine Flachdüse coextrudiert werden, die so erhaltene Vorfolie zur Verfestigung auf einer oder mehreren Walzen abgezogen wird, die Vorfolie anschließend biaxial gestreckt, die biaxial gestreckte Folie thermofixiert und dann aufgerollt wird, **dadurch gekennzeichnet, dass** die Folie mit mindestens einer antimikrobiell wirksamen Beschichtung versehen wird, wobei diese antimikrobielle Beschichtung
a) ein Ammoniumsilan der folgenden allgemeinen Formel (I) enthält: 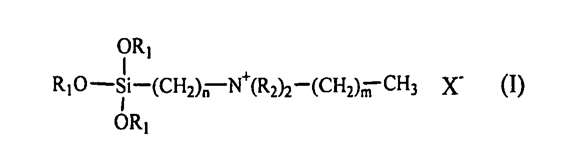 wobei
R₁ und R₂ jeweils gleich oder verschieden sind und unabhängig voneinander Wasserstoff- oder C1-C8-Alkylreste sind, die geradkettig oder- im Falle der C3-C8-Alkylreste - verzweigt sein können, bevorzugt sind R₁ und R₂ gleich und bedeuten -CH₃; in wässrigen Dispersionen bedeuten ein, zwei oder alle R₁-Reste Wasserstoff;
n größer als 0 und kleiner als 10 ist, bevorzugt 2 - 5 und besonders bevorzugt 3;
m größer als 0 und kleiner als 30 ist, bevorzugt 6 - 25 und besonders bevorzugt 15 - 20 und ganz besonders bevorzugt 17;
X⁻ Chlorid, Sulfat oder Nitrat ist;
und
b) die Beschichtung eine Dicke von kleiner 1 µm aufweist.

15. Verwendung einer Folie nach Anspruch 1 als Innenraumverkleidung, Möbelverkleidung, in Klimaanlagen, Filtergehäusen, medizinischen Geräten, an Wänden von Kühlhäusern, Kühlschränken, als medizinische Verpackung, Lebensmittelverpackung, im Sanitärbereich, für Hygieneartikel, Wundpflaster, in Bekleidung oder in Gewächshäusern.

## Claims

1. A biaxially stretched polyester film, comprising at least one base layer (B) and at least one antimicrobially active coating, where this antimicrobial coating
a) comprises an ammonium silane of the following formula (I): 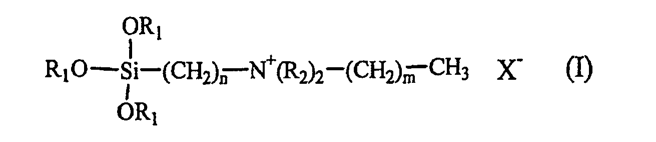 where
R₁ and R₂ are in each case identical or different and, independently of each other, are hydrogen moieties or C1-C8-alkyl moieties, which are straight-chain or - in the case of C3-C8-alkyl moieties - can be branched, R₁ and R₂ preferably being identical and being -CH₃; in aqueous dispersions, one, two or all of the R₁ moieties are hydrogen;
n is greater than 0 and smaller than 10, preferably from 2 to 5, and particularly preferably 3;
m is greater than 0 and smaller than 30, preferably from 6 to 25, and particularly preferably from 15 to 20, and very particularly preferably 17;
X⁻ is chloride, sulfate, or nitrate;
and
b) the thickness of the coating is smaller than 1 µm.

2. The polyester film as claimed in claim 1, which comprises, alongside a base layer (B), a further layer (A) under the antimicrobial coating, which comprises an antimicrobial agent.

3. The polyester film as claimed in claim 2, wherein the antimicrobial agent is based on elemental silver and/or silver ions as biocide.

4. The polyester film as claimed in claim 2 or 3, which comprises, alongside the base layer (B) and the layer (A), a further layer (C), located on that side of the base layer (B) opposite to the layer (A), and having no antimicrobial coating.

5. The polyester film as claimed in claim 4, wherein the layer (C) is sealable.

6. The polyester film as claimed in any of claims 2 to 5, wherein the antimicrobial agent is a silver-loaded zeolite.

7. The polyester film as claimed in any of claims 2 to 6, wherein the concentration present of the zeolite in the layer (A) is from 0.5 to 15 % by weight, based on the weight of the zeolite-containing layer.

8. The polyester film as claimed in claim 6 or 7, wherein the median particle size (d₅₀) of the zeolite is from 0.5 to 15 µm.

9. The polyester film as claimed in claim 6, 7, or 8, wherein the amount of silver in the zeolite is
from 0.5 to 20 % by weight, based on the weight of the zeolite.

10. The polyester film as claimed in any of claims 6 to 9, wherein the zeolite contains from 1 to 20 % by weight of zinc and/or copper, based on the weight of the zeolite.

11. The polyester film as claimed in any of claims 1 to 10, which comprises at least one UV stabilizer.

12. The polyester film as claimed in claim 11, wherein the UV stabilizer is a triazine.

13. The polyester film as claimed in any of claims 1 to 12, which comprises at least one dye, which is soluble in the polyester.

14. A process for the production of a film as claimed in claim 1, where the polymers corresponding to the individual layers are melted in an extruder and are coextruded through a flat-film die, the resultant prefilm is drawn off for solidification on one or more rolls, the prefilm is then biaxially stretched, and the biaxially stretched film is heat-set and then wound up, which comprises providing at least one antimicrobially active coating to the film, where this antimicrobial coating
a) comprises an ammonium silane of the following formula (I): 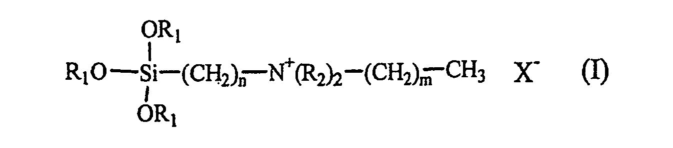 where
R₁ and R₂ are in each case identical or different and, independently of each other, are hydrogen moieties or C1-C8-alkyl moieties, which are straight-chain or - in the case of C3-C8-alkyl moieties - can be branched, R₁ and R₂ preferably being identical and being -CH₃; in aqueous dispersions, one, two or all of the R₁ moieties are hydrogen;
n is greater than 0 and smaller than 10, preferably from 2 to 5, and particularly preferably 3;
m is greater than 0 and smaller than 30, preferably from 6 to 25, and particularly preferably from 15 to 20, and very particularly preferably 17;
X⁻ is chloride, sulfate, or nitrate;
and
b) the thickness of the coating is smaller than 1 µm.

15. The use of a film as claimed in claim 1 as interior cladding, furniture cladding, in air-conditioning systems, in filter housings, in medical equipment, on walls of cold stores, or of refrigerators, as medical packaging, as food- or drink-packaging, in the sanitary sector, for hygiene items, for wound plasters, in apparel, or in greenhouses.

## Revendications

1. Feuille de polyester étirée biaxialement, comprenant au moins une couche de base (B) et au moins un revêtement efficace au plan antimicrobien, dans laquelle ce revêtement antimicrobien contient :
a) un silane d'ammonium de formule générale (I) suivante : 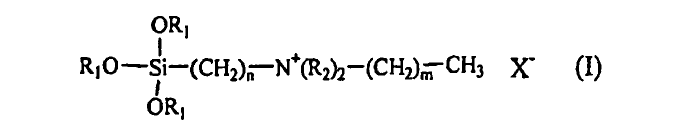 dans laquelle
R₁ et R₂ sont respectivement identiques ou différents et représentent, indépendamment l'un de l'autre, des résidus d'hydrogène ou d'alkyle en C1-C8, qui peuvent être linéaires ou - dans le cas de radicaux alkyle en C3-C8 - ramifiés, R₁ et R₂ étant de préférence identiques et représentant -CH₃ ; l'expression dans des dispersions aqueuses signifiant qu'un, deux ou l'ensemble des radicaux R₁ représente(nt) l'hydrogène ;
n est supérieur à 0 et inférieur à 10, de préférence, n vaut 2 à 5 et, mieux encore, vaut 3 ;
m est supérieur à 0 et inférieur à 30, de préférence, m vaut 6 à 25, mieux encore, 15 à 20 et, bien mieux encore, 17 ;
X⁻ et est un chlorure, un sulfate ou un nitrate ;
b) le revêtement présente une épaisseur inférieure à 1 µm.

2. Feuille de polyester selon la revendication 1, **caractérisée en ce qu'**elle présente, outre une couche de base (B), une autre couche (A) sous le revêtement antimicrobien, qui contient un agent antimicrobien.

3. Feuille de polyester selon la revendication 2, **caractérisée en ce que** l'agent antimicrobien est à base d'argent élémentaire et/ou d'ions d'argent comme biocide.

4. Feuille de polyester selon la revendication 2 ou 3, **caractérisée en ce qu'**elle comprend, outre la couche de base (B) et la couche (A), une autre couche (C) qui se trouve sur la face opposée à la couche (A) de la couche de base (B), et qui ne présente pas de revêtement antimicrobien.

5. Feuille de polyester selon la revendication 4, **caractérisée en ce que** la couche (C) peut être scellée.

6. Feuille de polyester selon l'une quelconque des revendications 2 à 5, **caractérisée en ce que** l'agent antimicrobien est une zéolite chargée avec de l'argent.

7. Feuille de polyester selon l'une quelconque des revendications 2 à 6, **caractérisée en ce que** la zéolite est présente dans la couche (A) en concentration de 0,5 à 15 % en poids, par rapport à la masse de la couche contenant la zéolite.

8. Feuille de polyester selon la revendication 6 ou 7, **caractérisée en ce que** la taille particulaire moyenne (d₅₀) de la zéolite est de 0,5 à 15 µm.

9. Feuille de polyester selon la revendication 6, 7 ou 8, **caractérisée en ce que** la quantité d'argent dans la zéolite est de 0,5 à 20 % en poids, par rapport à la masse de la zéolite.

10. Feuille de polyester selon l'une quelconque des revendications 6 à 9, **caractérisée en ce que** la zéolite contient 1 à 20 % en poids de zinc et/ou de cuivre, par rapport à la masse de la zéolite.

11. Feuille de polyester selon l'une quelconque des revendications 1 à 10, **caractérisée en ce que** la feuille contient au moins un stabilisateur UV.

12. Feuille de polyester selon la revendication 11, **caractérisée en ce que** le stabilisateur UV est une triazine.

13. Feuille de polyester selon l'une quelconque des revendications 1 à 12, **caractérisée en ce que** la feuille contient au moins un colorant qui est soluble dans le polyester.

14. Procédé pour la fabrication d'une feuille selon la revendication 1, dans lequel les polymères correspondants aux couches individuelles sont fondus dans une extrudeuse et sont co-extrudés à travers une filière plate, la feuille préliminaire obtenue de la sorte est extraite à des fins de solidification sur un ou plusieurs cylindres, la feuille préliminaire est ensuite étirée biaxialement, la feuille étirée biaxialement est soumise à une thermofixation, puis est enroulée, **caractérisé en ce que** la feuille est dotée d'au moins un revêtement efficace au plan antimicrobien, dans lequel ce revêtement antimicrobien contient :
a) un silane d'ammonium de formule générale (I) suivante : 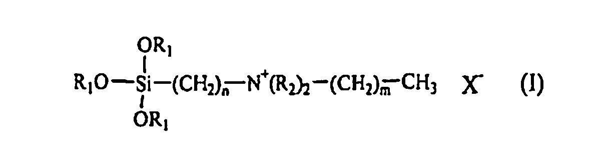 dans laquelle
R₁ et R₂ sont respectivement identiques ou différents et représentent, indépendamment l'un de l'autre, des résidus d'hydrogène ou des résidus d'alkyle en C1-C8 qui peuvent être linéaires ou - dans le cas de résidus d'alkyle en C3-C8 - ramifiés, R₁ et R₂ sont de préférence identiques et représentent -CH₃ ; l'expression dans des dispersions aqueuses signifiant qu'un, deux ou l'ensemble des radicaux R₁ représente(nt) l'hydrogène ;
n est supérieur à 0 et inférieur à 10, de préférence, n vaut 2 à 5 et, mieux encore, vaut 3 ;
m est supérieur à 0 et inférieur à 30, de préférence, m vaut 6 à 25, mieux encore, 15 à 20 et, bien mieux encore, 17 ;
X⁻ est un chlorure, un sulfate ou un nitrate ;
et
b) le revêtement présente une épaisseur inférieure à 1 µm.

15. Utilisation d'une feuille selon la revendication 1, comme revêtement d'espace intérieur, revêtement de mobilier, dans des systèmes d'air conditionné, dans des boîtiers de filtre, dans des appareils médicaux, sur des parois d'entrepôts frigorifiques, dans des réfrigérateurs, comme conditionnement médical, comme conditionnement pour des produits alimentaires, dans le domaine sanitaire, pour des articles hygiéniques, pour des pansements, dans l'habillement ou dans des serres.
